(19) Europäisches Patentamt
European Patent Office
Office européen des brevets

(11) **EP 3 490 693 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **17745352.9**

(22) Anmeldetag: **31.07.2017**

(51) Int Cl.:
**B01D 53/94** (2006.01)   **B01J 35/00** (2006.01)
**B01J 23/63** (2006.01)   **F01N 3/08** (2006.01)
**F01N 3/035** (2006.01)   **B01J 37/02** (2006.01)
**B01J 35/04** (2006.01)

(86) Internationale Anmeldenummer:
**PCT/EP2017/069261**

(87) Internationale Veröffentlichungsnummer:
**WO 2018/020049 (01.02.2018 Gazette 2018/05)**

(54) **KATALYSATOR ZUR REDUKTION VON STICKOXIDEN**

CATALYST FOR REDUCING NITROGEN OXIDES

CATALYSEUR POUR LA RÉDUCTION D'OXYDES D'AZOTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2016 EP 16182029**

(43) Veröffentlichungstag der Anmeldung:
**05.06.2019 Patentblatt 2019/23**

(73) Patentinhaber: **Umicore AG & Co. KG**
**63457 Hanau-Wolfgang (DE)**

(72) Erfinder:
• **SCHIFFER, Michael**
  **63450 Hanau (DE)**
• **HOYER, Ruediger**
  **63755 Alzenau-Hoerstein (DE)**
• **UTSCHIG, Thomas**
  **60598 Frankfurt am Main (DE)**
• **DORNHAUS, Franz**
  **63110 Rodgau (DE)**
• **WOERZ, Anke**
  **60435 Frankfurt (DE)**

(74) Vertreter: **Muley, Ralf**
**Umicore AG & Co. KG**
**Patente**
**Rodenbacher Chaussee 4**
**63457 Hanau-Wolfgang (DE)**

(56) Entgegenhaltungen:
EP-A1- 2 832 963    EP-A1- 2 982 434
EP-A1- 2 985 068    EP-B1- 2 544 796
DE-U1-202013 011 730    US-A1- 2009 320 457
US-A1- 2014 248 200    US-A1- 2014 260 214

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden ($NO_x$) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Rußpartikel können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters gasdicht verschlossen, so dass erste Kanäle gebildet werden, die an der ersten Seite des Filters offen und auf der zweiten Seite des Filters verschlossen sind, sowie zweite Kanäle, die an der ersten Seite des Filters verschlossen und auf der zweiten Seite des Filters offen sind. Das beispielsweise in die ersten Kanäle einströmende Abgas kann den Filter nur über die zweiten Kanäle wieder verlassen und muss zu diesem Zweck durch die porösen Wände zwischen den ersten und zweiten Kanälen durchfließen. Beim Durchtritt des Abgases durch die Wand werden die Partikel zurückgehalten.

Es ist bekannt, dass Partikelfilter mit katalytisch aktiven Beschichtungen versehen werden können. So beschreibt beispielsweise die EP1820561 A1 die Beschichtung eines Dieselpartikelfilters mit einer Katalysatorschicht, die das Abbrennen der gefilterten Rußpartikel erleichtert.

Die US2012/288427 A1 beschreibt einen Partikelfilter, der eine Beschichtung aus zwei Materialzonen umfasst. Dabei umfasst eine erste Materialzone Platin und Palladium in einem Gewichtsverhältnis von 1:0 bis größer als 1:1 und eine zweite Materialzone Platin und Palladium in einem Gewichtsverhältnis von 1:1 bis 0:1.

Die 2011/212008 beschreibt ebenfalls ein Partikelfilter, bei dem eine anströmseitige Zone Platin und eine abströmseitige Zone Palladium umfasst.

Zur Entfernung der Stickoxide sind sogenannte Stickoxid-Speicherkatalysatoren, für die auch der Begriff "Lean NOx Trap" oder "LNT" üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu $NO_2$, sowie CO und HC zu $CO_2$ zu oxidieren und andererseits während der fetten Betriebsphasen, in denen der Stickoxid-Speicherkatalysator regeneriert wird, freigesetztes $NO_2$ zu Stickstoff zu reduzieren.

Moderne Stickoxid-Speicherkatalysatoren sind beispielsweise in EP0885650 A2, US2009/320457, WO2012/029050 A1 und WO2016/020351 A1 beschrieben.

Es ist bereits bekannt, Rußpartikelfilter und Stickoxid-Speicherkatalysatoren zu kombinieren. So beschreiben beispielsweise die EP1420 149 A2 und die US2008/141661 Systeme aus einem Dieselpartikelfilter und einem abströmseitig angeordneten Stickoxid-Speicherkatalysator. WO2011/110837 beschreibt dagegen ein System aus einem Stickoxid-speicherkatalysator und einem abströmseitig angeordneten Dieselpartikelfilter.

Darüber hinaus ist bereits in beispielsweise EP1393069 A2, EP1433519 A1, EP2505803 A2 und US2014/322112 vorgeschlagen worden, Partikelfilter mit Stickoxid-Speicherkatalysatoren zu beschichten.

Die US2014/322112 beschreibt eine Zonierung der Beschichtung des Partikelfilters mit Stickoxid-Speicherkatalysator dergestalt, dass sich eine Zone ausgehend vom anströmseitigen Ende des Partikelfilters in den Eingangskanälen und eine andere Zone ausgehend vom abströmseitigen Ende des Partikelfilters in den Ausgangskanälen befindet. Sowohl die Beladung mit Washcoat, als auch die mit Edelmetall ist in der anströmseitigen Zone höher als in der abströmseitigen Zone.

Die EP2832963 A1 beschreibt ein Abgassystem bestehend aus einem Stickoxid-Speicherkatalysator und einem beschichteten Partikelfilter die jeweils zwei unterschiedliche Materialzonen aufweisen.

Abgasnachbehandlungssysteme für die Gesetzgebungsstufe Euro 6c und nachfolgende Gesetzgebungen müssen in einem weiten Betriebsbereich hinsichtlich Temperatur, Abgasmassenstrom und Stickoxid-Massenstrom, besonders hinsichtlich Partikelanzahl und Stickoxid-Reduktion effektiv funktionieren. Die bestehenden Euro 6a-Systeme mit einer Stickoxid-Speicherkatalysator-/Dieselpartikelfilter-Kombination weisen aber zum Teil zu wenig Stickoxid-Speicherkapazität auf, um bei allen Betriebszuständen effektiv Stickoxid zu reduzieren. Das kann zwar im Prinzip durch ein größeres Volumen des Stickoxid-Speicherkatalysators sichergestellt werden. Oftmals ist aber kein Bauraum für eine Volumenvergrößerung vorhanden.

Es besteht somit Bedarf an einem Katalysator bzw. einer Stickoxid-Speicherkatalysator-/Dieselpartikelfilter-Kombination, die ausreichend Stickoxid-Speicherkapazität aufweist und die mit dem zur Verfügung stehenden Bauraum auskommt.

Es wurde nun gefunden, dass eine passive Stickoxid-Speicherfunktion auf einem dem eigentlichen Stickoxid-Speicherkatalysator nachgeschalteten Dieselpartikelfilter das geschilderte Problem löst.

Die vorliegende Erfindung betrifft einen Katalysator der einen Tragkörper A mit einer Länge $L_A$, der als Durchflusssubstrat ausgeführt ist, einen Tragkörper B der Länge $L_B$, der als Wandflussfilter ausgeführt ist, und Materialzonen A1, A2, B1 und B2 umfasst,

wobei der Tragkörper A die Materialzonen A1 und A2 und der Tragkörper B die Materialzonen B1 und B2 umfasst,

wobei Materialzone A1 Ceroxid, eine Erdalkaliverbindung und/oder eine Alkaliverbindung, sowie Platin und/oder Palladium enthält und Materialzone A2 Ceroxid, sowie Platin und/oder Palladium enthält und frei von Erdalkali- und Alkaliverbindungen ist,

Materialzone B1 Palladium geträgert auf Ceroxid und

Materialzone B2 Platin geträgert auf einem Trägermaterial enthält, dadurch gekennzeichnet, dass sich Materialzone A1 ausgehend von einem Ende des Tragkörpers A auf 10 bis 80% seiner Länge $L_A$ und Materialzone A2 ausgehend vom anderen Ende des Tragkörpers A auf 10 bis 80% seiner Länge $L_A$ erstreckt.

Das Verhältnis Platin zu Palladium kann in den Materialzonen A1 und A2 gleich oder verschieden sein und beträgt beispielsweise 4:1 bis 18:1 oder 6:1 bis 16:1, beispielsweise 8:1, 10:1, 12:1 oder 14:1.

Die Materialzonen A1 und A2 können unabhängig voneinander als weiteres Edelmetall Rhodium enthalten. Rhodium liegt in diesen Fällen insbesondere in Mengen von 0,1 bis 10 g/ft$^3$ (entspricht 0,003 bis 0,35 g/l), bezogen auf das Volumen des Tragkörpers A vor.

Üblicherweise liegen in den Materialzonen A1 und A2 die Edelmetalle Platin und Palladium und gegebenenfalls Rhodium auf geeigneten Trägermaterialien vor. Als Trägermaterialien kommen alle dem Fachmann für diesen Zweck geläufigen Materialien in Betracht. Solche Materialien weisen eine BET-Oberfläche von 30 bis 250 $m^2$/g, bevorzugt von 100 bis 200 $m^2$/g auf (bestimmt nach DIN 66132) und sind insbesondere Aluminiumoxid, Siliziumoxid, Magnesiumoxid, Titanoxid, Ceroxid, sowie Mischungen oder Mischoxide von mindestens zwei dieser Materialien. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Es ist bevorzugt, wenn die Edelmetalle Platin, Palladium bzw. Rhodium lediglich auf einem oder mehreren der oben genannten Trägermaterialien geträgert sind und somit nicht mit allen Bestandteilen der jeweiligen Materialzone in enger Berührung stehen.

Als Erdalkaliverbindung umfasst Materialzone A1 insbesondere Oxide, Carbonate und/oder Hydroxide von Magnesium, Strontium und/oder Barium, besonders Magnesiumoxid, Bariumoxid und/oder Strontiumoxid. Als Alkaliverbindung umfasst Materialzone A1 insbesondere Oxide, Carbonate und/oder Hydroxide von Lithium, Kalium und/oder Natrium.

Bevorzugt liegt die Erdalkali- bzw. Alkaliverbindung in Mengen von 10 bis 50 g/l, besonders 15 bis 20 g/l, berechnet als Erdalkali- bzw. Alkalioxid, bezogen auf das Volumen des Tragkörpers A, vor.
Die Materialzonen A1 und A2 liegen auf Tragkörper A insbesondere in Mengen von bis zu 240 g/l, beispielsweise 100 bis 240 g/l, gerechnet als Summe der Materialzonen A1 und A2 und bezogen auf das Volumen des Tragkörpers A, vor.

Das in den Materialzonen A1 und A2 eingesetzte Ceroxid kann handelsüblicher Qualität sein, d.h. einen Ceroxid-Anteil von 90 bis 100 Gew.-% aufweisen. In Ausführungsformen umfassen die Materialzonen A1 und A2 keine Cer-Zirkon-Mischoxide.

In einer ersten Ausführungsform der vorliegenden Erfindung beträgt das Verhältnis von Ceroxid in Materialzone A2 zu Ceroxid in Materialzone A1, gerechnet jeweils in g/l und bezogen auf das Volumen des Tragkörpers A, 1:2 bis 3:1. Dabei beträgt die Summe von Ceroxid in Materialzone A1 und Materialzone A2, gerechnet in g/l und bezogen auf das Volumen des Tragkörpers A, insbesondere 100 bis 240 g/l.

In einer zweiten Ausführungsform der vorliegenden Erfindung umfasst Materialzone A1 Ceroxid in einer Menge von 110 bis 180 g/l bezogen auf das Volumen des Tragkörpers A, wobei

- das Verhältnis von Ceroxid in Materialzone A1 zu Ceroxid in Materialzone A2, gerechnet jeweils in g/l , bezogen auf das Volumen des Tragkörpers A, 1:1 bis 5:1 beträgt,

- die Summe von Ceroxid in Materialzone A1 und Materialzone A2, gerechnet in g/l und bezogen auf das Volumen des Tragkörpers A, 132 bis 240 g/l beträgt,
- das Verhältnis Pt:Pd gerechnet jeweils in g/l , bezogen auf das Volumen des Tragkörpers A, in Materialzone A1 und Materialzone A2 gleich ist und 2:1 bis 20:1 beträgt,
- die Summe von Platin und Palladium, gerechnet jeweils in g/l und bezogen auf das Volumen des Tragkörpers A, in Materialzone A1 und Materialzone A2 gleich sind, und
- das Verhältnis der Konzentrationen von Platin und Palladium in Materialzone A1 zu Platin und Palladium in Materialzone A2, jeweils bezogen auf die Gesamtmasse der jeweiligen Materialzone, gerechnet jeweils in g/l , bezogen auf das Volumen des Tragkörpers 1, 1:1 bis 1:5 beträgt.

In der zweiten Ausführungsform der vorliegenden Erfindung wird Ceroxid in Materialzone A1 bevorzugt in einer Menge von 110 bis 160 g/l, beispielsweise 125 bis 145 g/l, eingesetzt. In Materialzone A2 wird Ceroxid in Mengen von 22 bis 120 g/l, beispielsweise 40 bis 100 g/l oder 45 bis 65 g/l eingesetzt, jeweils bezogen auf das Volumen des Tragkörpers A.

Die Gesamt-Washcoatbeladung des Tragkörpers A beträgt in bevorzugten zweiten Ausführungsformen der vorliegenden Erfindung 300 bis 600 g/l, bezogen auf das Volumen des Tragkörpers A. Daraus ergibt sich, dass die Beladung mit Materialzone A1 150 bis 500 g/l und die Beladung mit Materialzone A2 50 bis 300 g/l, jeweils bezogen auf das Volumen des ersten Tragkörpers A, beträgt.

In weiteren zweiten Ausführungsformen der vorliegenden Erfindung beträgt die Beladung mit Materialzone A1 250 bis 300g/l, und mit Materialzone A2 50 bis 150 g/l, jeweils bezogen auf das Volumen des Tragkörpers A.

In einer dritten Ausführungsform der vorliegenden Erfindung liegt Materialzone A2 in einer Menge von 50 bis 200g/l , bezogen auf das Volumen des Tragkörpers A, vor und der Mindest-Massenanteil in % von Ceroxid in Materialzone A2 errechnet sich aus der Formel 0,1 x Menge der Materialzone B1 in g/l + 30.

Die Materialzonen A1 und A2 können auf Tragkörper A in verschiedenen Weisen angeordnet sein.

Erfindungsgemäß erstreckt sich Materialzone A1 ausgehend von einem Ende des Tragkörpers A auf 10 bis 80% seiner Länge $L_A$ und Materialzone A2 ausgehend vom anderen Ende des Tragkörpers A auf 10 bis 80% seine Länge $L_A$.

Es kann in diesem Fall sein, dass $L_A = L_{A1} + L_{A2}$ gilt, wobei $L_{A1}$ die Länge der Materialzone A1 und $L_{A2}$ die Länge der Materialzone A2 ist. Es kann aber auch $L_A < L_{A1} + L_{A2}$ gelten. In diesem Fall überlappen sich die Materialzonen A1 und A2. Schließlich kann auch $L_A > L_{A1} + L_{A2}$ gelten, wenn ein Teil des ersten Tragkörpers frei von Materialzonen A1 und A2 bleibt. Im letztgenannten Fall bleibt zwischen den Materialzonen A1 und A2 ein Spalt, der mindestens 0,5 cm lang ist, also beispielsweise 0,5 bis 1 cm. Materialzone B1 enthält erfindungsgemäß Palladium geträgert auf Ceroxid. Auch hier kann das eingesetzte Ceroxid handelsüblicher Qualität sein, d.h. einen Ceroxid-Anteil von 90 bis 100 Gew.-% aufweisen. Insbesondere liegt der Ceroxid-Gehalt bei 98 bis 100 Gew.-%.

In Ausführungsformen umfasst die Materialzone B1 keine Cer-Zirkon-Mischoxide.

Die Ceroxid-Menge in Materialzone B1 beträgt insbesondere 80-120 g/l, bezogen auf das Volumen des Tragkörpers B.

Die Palladiummenge in Materialzone B1 beträgt insbesondere 0,1 bis 0,35 g/l, bezogen auf das Volumen des Tragkörpers B.

Materialzone B1 kann neben Palladium und Ceroxid auch weitere Trägermaterialien enthalten und zwar insbesondere in Mengen von bis zu 20 g/l, bezogen auf das Volumen des Tragkörpers B.

Geeignete Trägermaterialien sind insbesondere Aluminiumoxid, Siliziumoxid, Magnesiumoxid, Titanoxid, sowie Mischungen oder Mischoxide von mindestens zwei dieser Materialien.

Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Materialzone B2 enthält erfindungsgemäß Platin geträgert auf einem Trägermaterial.

Dabei beträgt die Platinmenge in Materialzone B2 insbesondere 0,1 bis 0,35 g/l und die des Trägermaterials 70 bis 100 g/l, jeweils bezogen auf das Volumen des Tragkörpers B.

Als Trägermaterial kommen wie schon in Materialzone B1 Aluminiumoxid, Siliziumoxid, Magnesiumoxid, Titanoxid, sowie Mischungen oder Mischoxide von mindestens zwei dieser Materialien in Frage, wobei Aluminiumoxid, Magnesium/Aluminium-Mischoxide und Aluminium/Silizium-Mischoxide bevorzugt sind. Sofern Aluminiumoxid verwendet wird, so ist es besonders bevorzugt stabilisiert, beispielsweise mit 1 bis 6 Gew.-%, insbesondere 4 Gew.-%, Lanthanoxid. Besonders bevorzugt wird in Materialzone B2 Aluminiumoxid verwendet.

Tragkörper B ist erfindungsgemäß ein Wandflussfilter. Im Unterschied zu Tragkörper A, der als Durchflusssubstrat vorliegt, bei dem sich an beiden Enden offene Kanäle der Länge $L_A$ parallel zwischen seinen beiden Enden erstrecken, sind die Kanäle im Wandflussfilter abwechselnd entweder am ersten Ende $B_{E1}$ oder am zweiten Ende $B_{E2}$ gasdicht verschlossen. Gas, das an einem Ende in einen Kanal eintritt, kann somit den Wandflussfilter nur dann wieder verlassen, wenn es durch die Kanalwand in einen Kanal eintritt, der am anderen Ende offen ist. Die Kanalwände sind üblicherweise porös und weisen im unbeschichteten Zustand beispielsweise Porositäten von 30 bis 80, insbesondere 50 bis 75% auf. Ihre durchschnittliche Porengröße beträgt im unbeschichteten Zustand beispielsweise 5 bis 30 Mikrometer. In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Materialzonen B1 und B2 können auf Tragkörper B in verschiedener Weise angeordnet sein. In einer vierten Ausführungsform der vorliegenden Erfindung liegen beide Materialzonen B1 und B2 nur auf einem Teil der Länge $L_B$ des Tragkörpers B vor. Wenn $L_{B1}$ die Länge der Materialzone B1 und $L_{B2}$ die Länge der Materialzone B2 ist gilt insbesondere $L_B = L_{B1} + L_{B2}$ oder $L_B > L_{B1} + L_{B2}$. Im letztgenannten Fall bleibt zwischen den Materialzonen B1 und B2 ein Spalt, der mindestens 0,5 cm lang ist, also beispielsweise 0,5 bis 1 cm. In diesen Ausführungsformen befinden sich die Materialzonen B1 und B2 insbesondere in den porösen Wänden des Tragkörpers B.

In einer fünften Ausführungsform der vorliegenden Erfindung erstreckt sich Materialzone B1 über die gesamte Länge $L_B$ des Tragkörpers B und befindet sich in dessen porösen Wänden. In diesem Fall befindet sich Materialzone B2 insbesondere auf den porösen Wänden des Tragkörpers B und zwar in den Kanälen, die am ersten Ende $B_{E1}$ des Tragkörpers B gasdicht verschlossen sind.

In einer sechsten Ausführungsform der vorliegenden Erfindung folgt der Tragkörper B dem Tragkörper A in Stromabwärtsrichtung. Mit anderen Worten ist Tragkörper A anströmseitig und Tragkörper B abströmseitig angeordnet.

Die Aufbringung der katalytisch aktiven Materialzonen A1, A2, B1 und B2 auf Tragkörper A beziehungsweise Tragkörper B erfolgt mit Hilfe entsprechender Beschichtungssuspensionen (Washcoat) nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Im Übrigen ist dem Fachmann bekannt, dass im Falle von Wandflussfiltern deren durchschnittliche Porengröße und die mittlere Teilchengröße der in den Beschichtungssuspensionen zur Herstellung der Materialzonen B1 und B2 enthaltenen Teilchen so aufeinander abgestimmt werden können, dass die Materialzonen B1 und/oder B2 auf den porösen Wänden, die die Kanäle des Wandflussfilters bilden, liegen (auf-Wand-Beschichtung). Alternativ können sie so gewählt werden, dass sich die Materialzonen B1 und B2 in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße klein genug sein, um in die Poren des Wandflussfilters eindringen zu können.

Durchflusssubstrate und Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit.

Die erfindungsgemäßen Katalysatoren eignen sich in hervorragender Weise zur Konvertierung von $NO_x$ in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass NOx-Konvertierung bei hohen Temperaturen negativ beeinflusst wird. Die erfindungsgemäßen Stickoxid-Speicherkatalysatoren sind somit für Euro 6 Anwendungen geeignet.

Die vorliegende Erfindung betrifft somit auch ein Verfahren zur Konvertierung von $NO_x$ in Abgasen von Kraftfahrzeugen, die mit mager betriebenen Motoren, etwa Dieselmotoren, betrieben werden, das dadurch gekennzeichnet ist, dass das Abgas über einen erfindungsgemäßen Katalysator geleitet wird, wobei das Abgas zuerst durch den Tragkörper A und danach durch den Tragkörper B geleitet wird.

Beispiel 1

a) Zur Herstellung eines erfindungsgemäßen Katalysators wird ein handelsüblicher wabenförmiger Durchfluss-Keramikträger mit einer ersten Materialzone A1 beschichtet, die Pt, Pd und Rh geträgert auf einem Lanthan-stabilisiertem Alumina, Ceroxid in einer Menge von 125 g/l, sowie 20 g/l Bariumoxid und 15 g/l Magnesiumoxid enthält. Die Beladung von Pt und Pd beträgt dabei 50 g/cft (1,766 g/l) und 5 g/cft (0,177 g/l) und die Gesamtbeladung der Washcoatschicht 300 g/l bezogen auf das Volumen des Keramik-Trägers.

b) Auf die erste Materialzone A1 wird eine weitere Materialzone A2 aufgebracht, die ebenfalls Pt und Pd sowie Rh geträgert auf einem Lanthan-stabilisiertem Alumina enthält. Die Beladung von Pt, Pd und Rh in dieser Washcoatschicht beträgt 50 g/cft (1,766 g/l), 5 g/cft (0,177 g/l) und 5 g/cft (0,177 g/l). Die Materialzone A2 enthält außerdem 55 g/l Ceroxid bei einer Washcoatbeladung der Schicht B von 101 g/l.

c) Im nächsten Schritt wird ein handelsüblicher Wandflussfilter aus Cordierit so beschichtet, dass sich Materialzonen B1 und B2 beide in der porösen Wand zwischen den Kanälen befindet. Beide Materialzonen werden aber nur über 50% der Länge des Wandflussfilters beschichtet und zwar Materialzone B1 von einem Ende des Wandflussfilters ausgehend und Materialzone B2 vom anderen Ende ausgehend.

Materialzone B1 besteht aus 1,11 g/l (3 g/ft3) Palladium auf 80 g/l Ceroxid und 20 g/l Aluminiumoxid, während Materialzone B2 aus 1,11 g/l (3 g/ft3) Platin auf 70 g/l Aluminiumoxid besteht.

d) Der beschichtete Durchfluss-Keramikträger gemäß a) und b) und der Wandflussfilter gemäß c) werden so kombiniert, dass im Betrieb der Durchfluss-Keramikträger anströmseitig und der Wandflussfilter abströmseitig angeordnet ist.

Es ist darauf zu achten, dass das Abgas in den Durchfluss-Keramikträger so eintritt, dass es zuerst mit Materialzone A2 in Kontakt kommt.

Es ist darüber hinaus darauf zu achten, dass das Abgas in den Wandflussfilter so eintritt, dass es zuerst mit Materialzone B1 in Kontakt kommt.

## Patentansprüche

1. Katalysator der einen Tragkörper A mit einer Länge $L_A$, der als Durchflusssubstrat ausgeführt ist, einen Tragkörper B der Länge $L_B$, der als Wandflussfilter ausgeführt ist, und Materialzonen A1, A2, B1 und B2 umfasst,
wobei der Tragkörper A die Materialzonen A1 und A2 und der Tragkörper B die Materialzonen B1 und B2 umfasst,
wobei Materialzone A1 Ceroxid, eine Erdalkaliverbindung und/oder eine Alkaliverbindung, sowie Platin und/oder Palladium enthält und
Materialzone A2 Ceroxid, sowie Platin und/oder Palladium enthält und frei von Erdalkali- und Alkaliverbindungen ist,
Materialzone B1 Palladium geträgert auf Ceroxid und
Materialzone B2 Platin geträgert auf einem Trägermaterial enthält,
**dadurch gekennzeichnet, dass** sich Materialzone A1 ausgehend von einem Ende des Tragkörpers A auf 10 bis 80% seiner Länge $L_A$ und Materialzone A2 ausgehend vom anderen Ende des Tragkörpers A auf 10 bis 80% seiner Länge $L_A$ erstreckt.

2. Katalysator gemäß Anspruch 1, **dadurch gekennzeichnet, dass** das Verhältnis Platin zu Palladium in den Materialzonen A1 und A2 gleich oder verschieden ist und 4:1 bis 18:1 beträgt.

3. Katalysator gemäß Anspruch 1 und/oder 2, **dadurch gekennzeichnet, dass** die Materialzonen A1 und A2 unabhängig voneinander Rhodium enthalten.

4. Katalysator gemäß einem oder mehreren der Ansprüche 1 bis 3, **dadurch gekennzeichnet, dass**
die Erdalkaliverbindung in der Materialzone A1 Oxide, Carbonate oder Hydroxide von Magnesium, Strontium und/oder Barium umfasst.

5. Katalysator gemäß einem oder mehreren der Ansprüche 1 bis 3, **dadurch gekennzeichnet, dass** die Alkaliverbindung in der Materialzone A1 Oxide, Carbonate oder Hydroxide von Lithium, Kalium und/oder Natrium umfasst.

6. Katalysator gemäß einem oder mehreren der Ansprüche 1 bis 5, **dadurch gekennzeichnet, dass** die Erdalkali- bzw. Alkaliverbindung in Mengen von 10 bis 50 g/l, berechnet als Erdalkali- bzw. Alkalioxid und bezogen auf das Volumen des Tragkörpers A, vorliegt.

7. Katalysator gemäß einem oder mehreren der Ansprüche 1 bis 6, **dadurch gekennzeichnet, dass** das Verhältnis von Ceroxid in Materialzone A2 zu Ceroxid in Materialzone A1, gerechnet jeweils in g/l und bezogen auf das Volumen des Tragkörpers A, 1:2 bis 3:1 beträgt.

8. Katalysator gemäß einem oder mehreren der Ansprüche 1 bis 6, **dadurch gekennzeichnet, dass** Materialzone A1 Ceroxid in einer Menge von 110 bis 180 g/l, bezogen auf das Volumen des Tragkörpers A, umfasst, wobei

- das Verhältnis von Ceroxid in Materialzone A1 zu Ceroxid in Materialzone A2, gerechnet jeweils in g/l, bezogen auf das Volumen des Tragkörpers A, 1:1 bis 5:1 beträgt,
- die Summe von Ceroxid in Materialzone A1 und Materialzone A2, gerechnet in g/l und bezogen auf das Volumen des Tragkörpers A, 132 bis 240 g/l beträgt,
- das Verhältnis Pt:Pd gerechnet jeweils in g/l, bezogen auf das Volumen des Tragkörpers A, in Materialzone A1 und Materialzone A2 gleich ist und 2:1 bis 20:1 beträgt,
- die Summe von Platin und Palladium, gerechnet jeweils in g/l und bezogen auf das Volumen des Tragkörpers A, in Materialzone A1 und Materialzone A2 gleich sind, und
- das Verhältnis der Konzentrationen von Platin und Palladium in Materialzone A1 zu Platin und Palladium in Materialzone A2, jeweils bezogen auf die Gesamtmasse der jeweiligen Materialzone, gerechnet jeweils in g/l, bezogen auf das Volumen des Tragkörpers 1, 1:1 bis 1:5 beträgt.

9. Katalysator gemäß einem oder mehreren der Ansprüche 1 bis 6, **dadurch gekennzeichnet, dass** Materialzone A2 in einer Menge von 50 bis 200g/l , bezogen auf das Volumen des Tragkörpers A, vorliegt und der Mindest-Massenanteil in % von Ceroxid in Materialzone A2 sich errechnet aus der Formel 0,1 × Menge der Materialzone B1 in g/l + 30.

10. Katalysator gemäß Anspruch 1, **dadurch gekennzeichnet, dass**

$$L_A = L_{A1} + L_{A2}$$

oder

$$L_A < L_{A1} + L_{A2}$$

oder

$$L_A > L_{A1} + L_{A2}$$

gilt, wobei $L_A$ die Länge des Tragkörpers A, $L_{A1}$ die Länge der Materialzone A1 und $L_{A2}$ die Länge der Materialzone A2 ist.

11. Katalysator gemäß einem oder mehreren der Ansprüche 1 bis 10, **dadurch gekennzeichnet, dass** beide Materialzonen B1 und B2 nur auf einem Teil der Länge $L_B$ des Tragkörpers B vorliegen.

12. Katalysator gemäß Anspruch 11, **dadurch gekennzeichnet, dass**

$$L_B = L_{B1} + L_{B2}$$

oder

$$L_B > L_{B1} + L_{B2}$$

gilt, wobei $L_B$ die Länge des Tragkörpers B, $L_{B1}$ die Länge der Materialzone B1 und $L_{B2}$ die Länge der Materialzone B2 ist.

13. Katalysator gemäß Anspruch 11 und/oder 12, **dadurch gekennzeichnet, dass** die Materialzonen B1 und B2 in den porösen Wänden des Tragkörpers B befinden.

14. Katalysator gemäß einem oder mehreren der Ansprüche 1 bis 10, **dadurch gekennzeichnet, dass** sich Materialzone B1 über die gesamte Länge $L_B$ des Tragkörpers B erstreckt und sich in dessen porösen Wänden befindet.

15. Katalysator gemäß Anspruch 14, **dadurch gekennzeichnet, dass** sich Materialzone B2 auf den porösen Wänden des Tragkörpers B in den Kanälen befindet, die am ersten Ende $B_{E1}$ des Tragkörpers B gasdicht verschlossen sind.

16. Katalysator gemäß einem oder mehreren der Ansprüche 1 bis 15, **dadurch gekennzeichnet, dass** Tragkörper A anströmseitig und Tragkörper B abströmseitig angeordnet sind.

17. Verfahren zur Konvertierung von $NO_x$ in Abgasen von Kraftfahrzeugen, die mit mager betriebenen Motoren betrieben werden, **dadurch gekennzeichnet, dass** das Abgas über einen Katalysator gemäß einem oder mehreren der Ansprüche 1 bis 16 geleitet wird, wobei das Abgas zuerst durch den Tragkörper A und danach durch den Tragkörper B geleitet wird.

**Claims**

1. Catalyst comprising a support body A having a length $L_A$ designed as a flow substrate, a support body B of length $L_B$ designed as a wall-flow filter, and material zones A1, A2, B1, and B2,
wherein support body A comprises material zones A1 and A2, and support body B comprises material zones B1 and B2,
wherein material zone A1 contains cerium oxide, an alkaline earth metal compound and/or an alkali metal compound, as well as platinum and/or palladium, and
material zone A2 contains cerium oxide as well as platinum and/or palladium, and is free of alkaline earth metal and alkali metal compounds,
material zone B1 contains palladium supported on cerium oxide, and
material zone B2 contains platinum supported on a support material,
**characterized in that** material zone A1 extends from one end of the support body A over 10 to 80 % of its length $L_A$ and material zone A2 extends from the other end of the support body A over 10 to 80 % of its length $L_A$.

2. Catalyst according to claim 1, **characterized in that** the ratio of platinum to palladium in the material zones A1 and A2 is the same or different and amounts to 4:1 to 18:1.

3. Catalyst according to claim 1 and/or 2, **characterized in that** the material zones A1 and A2 contain rhodium independently of one another.

4. Catalyst according to one or more of claims 1 to 3, **characterized in that** the alkaline earth metal compound in material zone A1 comprises oxides, carbonates, or hydroxides of magnesium, strontium, and/or barium.

**5.** Catalyst according to one or more of claims 1 to 3, **characterized in that** the alkali metal compound in material zone A1 comprises oxides, carbonates, or hydroxides of lithium, potassium, and/or sodium.

**6.** Catalyst according to one or more of claims 1 to 5, **characterized in that** the alkaline earth or alkali metal compound is present in quantities of 10 to 50 g/L, calculated as alkaline earth or alkali metal oxide and based on the volume of the support body A.

**7.** Catalyst according to one or more of claims 1 to 6, **characterized in that** the ratio of cerium oxide in material zone A2 to cerium oxide in material zone A1, calculated in each case in g/L and based on the volume of the support body A, amounts to 1:2 to 3:1.

**8.** Catalyst according to one or more of claims 1 to 6, **characterized in that** material zone A1 comprises cerium oxide in a quantity of 110 to 180 g/L based on the volume of the support body A, wherein

- the ratio of cerium oxide in material zone A1 to cerium oxide in material zone A2, calculated in each case in g/L based on the volume of the support body A, amounts to 1:1 to 5:1,
- the sum of cerium oxide in material zone A1 and material zone A2, calculated in g/L and based on the volume of the support body A, amounts to 132 to 240 g/L,
- the Pt:Pd ratio, calculated in each case in g/L based on the volume of the support body A, is the same in material zone A1 and material zone A2 and amounts to 2:1 to 20:1,
- the sum of platinum and palladium, calculated in each case in g/L and based on the volume of the support body A, is the same in material zone A1 and material zone A2, and
- the ratio of the concentrations of platinum and palladium in material zone A1 to platinum and palladium in material zone A2, in each case based on the total mass of the respective material zone, calculated in each case in g/L based on the volume of the support body 1, amounts to 1:1 to 1:5.

**9.** Catalyst according to one or more of claims 1 to 6, **characterized in that** material zone A2 is present in a quantity of 50 to 200 g/L based on the volume of the support body A, and the minimum mass fraction in % of cerium oxide in material zone A2 is calculated using the formula
0.1 × amount of material zone B1 in g/L + 30.

**10.** Catalyst according to claim 1, **characterized in that**

$$L_A = L_{A1} + L_{A2}$$

or

$$L_A < L_{A1} + L_{A2}$$

or

$$L_A > L_{A1} + L_{A2}$$

applies, where $L_A$ is the length of support body A, $L_{A1}$ is the length of material zone A1, and $L_{A2}$ is the length of material zone A2.

**11.** Catalyst according to one or more of claims 1 to 10, **characterized in that** both material zones B1 and B2 are present only over part of the length $L_B$ of the support body B.

**12.** Catalyst according to claim 11, **characterized in that**

$$L_B = L_{B1} + L_{B2}$$

or

$$L_B > L_{B1} + L_{B2}$$

applies, where $L_B$ is the length of support body B, $L_{B1}$ is the length of material zone B1, and $L_{B2}$ is the length of material zone B2.

**13.** Catalyst according to claim 11 and/or 12, **characterized in that** the material zones B1 and B2 are located in the porous walls of the support body B.

**14.** Catalyst according to one or more of claims 1 to 10, **characterized in that** material zone B1 extends over the entire length $L_B$ of the support body B and is located in its porous walls.

**15.** Catalyst according to claim 14, **characterized in that** material zone B2 is located on the porous walls of the support body B in the channels which are sealed in a gas-tight manner at the first end $B_{E1}$ of the support body B.

**16.** Catalyst according to one or more of claims 1 to 15, **characterized in that** support bodies A are arranged on the inflow side and support bodies B are arranged on the outflow side.

**17.** Method for converting NO$_x$ in exhaust gases of motor vehicles operated with lean-burn engines, **characterized in that** the exhaust gas is passed over a catalyst according to one or more of claims 1 to 16, wherein the exhaust gas is first passed through the support body A and then through the support body B.

**Revendications**

**1.** Catalyseur qui comprend un corps de support A présentant une longueur L$_A$, qui est conçu comme un substrat à écoulement traversant, un corps de support B de longueur L$_B$, qui est conçu comme un filtre à paroi poreuse, et des zones matérielles A1, A2, B1, B2,

le corps de support A comprenant les zones matérielles A1 et A2 et le corps de support B comprenant les zones matérielles B1 et B2,

la zone matérielle A1 contenant de l'oxyde de cérium, un composé alcalino-terreux et/ou un composé alcalin ainsi que du platine et/ou du palladium, et

la zone matérielle A2 contenant de l'oxyde de cérium ainsi que du platine et/ou du palladium et étant exempte de composés alcalino-terreux et alcalins,

la zone matérielle B1 contenant du palladium supporté sur de l'oxyde de cérium et

la zone matérielle B2 contenant du platine supporté sur un matériau de support,

**caractérisé en ce que** la zone matérielle A1 s'étend à partir d'une extrémité du corps de support A sur 10 à 80 % de sa longueur L$_A$ et la zone matérielle A2 s'étend à partir de l'autre extrémité du corps de support A sur 10 à 80 % de la longueur L$_A$.

**2.** Catalyseur selon la revendication 1, **caractérisé en ce que** le rapport de platine à palladium dans les zones matérielles A1 et A2 est identique ou différent et est de 4:1 à 18:1.

**3.** Catalyseur selon la revendication 1 et/ou 2, **caractérisé en ce que** les zones matérielles A1 et A2 contiennent, indépendamment l'une de l'autre, du rhodium.

**4.** Catalyseur selon l'une ou plusieurs des revendications 1 à 3, **caractérisé en ce que** le composé alcalino-terreux dans la zone matérielle A1 comprend des oxydes, des carbonates ou des hydroxydes de magnésium, de strontium et/ou de baryum.

**5.** Catalyseur selon l'une ou plusieurs des revendication 1 à 3, **caractérisé en ce que** le composé alcalin dans la zone matérielle A1 comprend des oxydes, des carbonates ou des hydroxydes de lithium, de potassium et/ou de sodium.

**6.** Catalyseur selon l'une ou plusieurs des revendications 1 à 5, **caractérisé en ce que** le composé alcalino-terreux ou alcalin est présent en des quantités de 10 à 50 g/l, exprimé en oxyde alcalino-terreux ou alcalin et par rapport au volume du corps de support A.

**7.** Catalyseur selon l'une ou plusieurs des revendications 1 à 6, **caractérisé en ce que** le rapport de l'oxyde de cérium dans la zone matérielle A2 à l'oxyde de cérium dans la zone matérielle A1, calculés respectivement en g/l et par rapport au volume du corps de support A, est de 1:2 à 3:1.

**8.** Catalyseur selon l'une ou plusieurs des revendications 1 à 6, **caractérisé en ce que** la zone matérielle A1 comprend de l'oxyde de cérium en une quantité de 110 à 18 g/l, par rapport au volume du corps de support A,

- le rapport de l'oxyde de cérium dans la zone matérielle A1 à l'oxyde de cérium dans la zone matérielle A2, calculés respectivement en g/l, par rapport au volume du corps de support A, étant de 1:1 à 5:1,
- la somme de l'oxyde de cérium dans la zone matérielle A1 et dans la zone matérielle A2, calculé en g/l et par rapport au volume du corps de support A, étant de 132 à 240 g/l,
- les rapports Pt:Pd, calculés respectivement en g/l, par rapport au volume du corps de support A, dans la zone matérielle A1 et dans la zone matérielle A2 étant identiques et de 2:1 à 20:1,
- les sommes de platine et de palladium, calculés respectivement en g/l et par rapport au volume du corps de support A, étant identiques dans la zone matérielle A1 et dans la zone matérielle A2 et
- le rapport des concentrations en platine et en palladium dans la zone matérielle A1 à celles en platine et en palladium dans la zone matérielle A2, respectivement par rapport à la masse totale de la zone matérielle respective, calculées en g/l, par rapport au volume du corps de support 1, étant de 1:1 à 1:5.

**9.** Catalyseur selon l'une ou plusieurs des revendications 1 à 6, **caractérisé en ce que** la zone matérielle A2 est présente en une quantité de 50 à 200 g/l, par rapport au volume du corps de support A, et la fraction massique minimale en % d'oxyde de cérium dans la zone matérielle A2 est calculée par la formule 0,1 x quantité de la zone matérielle B1 en g/l + 30.

**10.** Catalyseur selon la revendication 1, **caractérisé en ce que**

$$L_A = L_{A1} + L_{A2}$$

ou

$$L_A < L_{A1} + L_{A2}$$

ou

$$L_A > L_{A1} + L_{A2,}$$

$L_A$ étant la longueur du corps de support A, $L_{A1}$ étant la longueur de la zone matérielle A1 et $L_{A2}$ étant la longueur de la zone matérielle A2.

**11.** Catalyseur selon l'une ou plusieurs des revendications 1 à 10, **caractérisé en ce que** les deux zones matérielles B1 et B2 ne sont présentes que sur une partie de la longueur $L_B$ du corps de support B.

**12.** Catalyseur selon la revendication 11, **caractérisé en ce que**

$$L_B = L_{B1} + L_{B2}$$

ou

$$L_B > L_{B1} + L_{B2}$$

$L_B$ étant la longueur du corps de support B, $L_{B1}$ étant la longueur de la zone matérielle B1 et $L_{B2}$ étant la longueur de la zone matérielle B2.

**13.** Catalyseur selon la revendication 11 et/ou 12, **caractérisé en ce que** les zones matérielles B1 et B2 se situent dans les parois poreuses du corps de support B.

**14.** Catalyseur selon l'une ou plusieurs des revendications 1 à 10, **caractérisé en ce que** la zone matérielle B1 s'étend sur toute la longueur $L_B$ du corps de support B et se situe dans les parois poreuses de celui-ci.

**15.** Catalyseur selon la revendication 14, **caractérisé en ce que** la zone matérielle B2 se situe sur les parois poreuses du corps de support B dans les canaux qui sont fermés de manière étanche aux gaz au niveau de la première extrémité $B_{E1}$ du corps de support B.

**16.** Catalyseur selon l'une ou plusieurs des revendications 1 à 15, **caractérisé en ce que** le corps de support A est disposé du côté en amont et le corps de support B est situé du côté en aval.

**17.** Procédé pour la conversion de $NO_x$ dans des gaz d'échappement de véhicules à moteur qui sont entraînés par des moteurs fonctionnant en régime pauvre, **caractérisé en ce que** le gaz d'échappement est guidé sur un catalyseur selon l'une ou plusieurs des revendications 1 à 16, le gaz d'échappement passant en premier à travers le corps de support A et ensuite à travers le corps de support B.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1820561 A1
- US 2012288427 A1
- WO 2011212008 A
- EP 0885650 A2
- US 2009320457 A
- WO 2012029050 A1
- WO 2016020351 A1
- EP 1420149 A2

- US 2008141661 A
- WO 2011110837 A
- EP 1393069 A2
- EP 1433519 A1
- EP 2505803 A2
- US 2014322112 A
- EP 2832963 A1